(19) Europäisches Patentamt
European Patent Office
Office européen des brevets

(11) **EP 2 484 873 B1**

(12) **EUROPEAN PATENT SPECIFICATION**

(45) Date of publication and mention
of the grant of the patent:
**26.12.2018 Bulletin 2018/52**

(21) Application number: **10820571.7**

(22) Date of filing: **29.09.2010**

(51) Int Cl.:
*F01K 23/10* (2006.01)    *F01K 23/16* (2006.01)
*F01N 5/02* (2006.01)    *F02B 41/10* (2006.01)
*F02G 5/02* (2006.01)

(86) International application number:
**PCT/JP2010/066936**

(87) International publication number:
**WO 2011/040456 (07.04.2011 Gazette 2011/14)**

(54) **CONTROL DEVICE FOR POWER GENERATION SYSTEM, POWER GENERATION SYSTEM, AND CONTROL METHOD FOR POWER GENERATION SYSTEM**

STEUERVORRICHTUNG FÜR EIN STROMERZEUGUNGSSYSTEM, STROMERZEUGUNGSSYSTEM UND STEUERVERFAHREN FÜR EIN STROMERZEUGUNGSSYSTEM

DISPOSITIF DE COMMANDE POUR SYSTÈME DE PRODUCTION DE PUISSANCE, SYSTÈME DE PRODUCTION DE PUISSANCE, ET PROCÉDÉ DE COMMANDE POUR SYSTÈME DE PRODUCTION DE PUISSANCE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **30.09.2009 JP 2009228595**

(43) Date of publication of application:
**08.08.2012 Bulletin 2012/32**

(73) Proprietor: **Mitsubishi Heavy Industries, Ltd.**
**Tokyo 108-8215 (JP)**

(72) Inventors:
• **ICHIKI, Yoshihiro**
**Tokyo 108-8215 (JP)**
• **NISHIKAWA, Yoshihiko**
**Nagasaki-shi**
**Nagasaki 850-8610 (JP)**

• **KOBAYASHI, Eiji**
**Nagasaki-shi**
**Nagasaki 850-8610 (JP)**

(74) Representative: **Henkel, Breuer & Partner**
**Patentanwälte**
**Maximiliansplatz 21**
**80333 München (DE)**

(56) References cited:
WO-A1-2006/072791    DE-A1-102006 040 857
DE-B1- 2 838 490    JP-A- 10 089 017
JP-A- 63 124 810    JP-A- 63 124 810
JP-A- 2000 297 610    JP-A- 2005 320 938
JP-A- 2009 532 614

**Description**

{Technical Field}

The present invention relates to a power-generating-system control device, a power-generating system, and a method of controlling a power-generating system equipped with a steam turbine and a power turbine that use exhaust-gas energy of exhaust gas discharged from a main engine, which serves as a marine diesel engine, a land-based generator diesel engine, or the like.

{Background Art}

In a known power-generating system, a portion of exhaust gas from a marine-propulsion diesel engine (main engine) is extracted and guided to a power turbine to be used for power generation, and steam generated in an exhaust-gas boiler that uses exhaust gas from the diesel engine is guided to a steam turbine to be used for power generation. Conventionally, in the power-generating system of this type, an inlet valve for controlling the amount of exhaust gas supplied to the power turbine includes an on-off valve that switches between ON and OFF states.

On the other hand, PTL 1 discloses a technology in which a portion of exhaust gas from a diesel engine is guided not to a supercharger but to a power turbine or the like to recover exhaust-gas energy as motive power. Furthermore, the amount of exhaust gas is adjusted when the exhaust gas enters the power turbine, so as to reduce the degree of change in the amount of exhaust gas guided from the diesel engine to the supercharger. The amount of exhaust gas entering the power turbine is adjusted by forming a gas inlet of the power turbine from a plurality of paths each having a bypass valve.

{Citation List}

{Patent Literature}

{PTL 1} Japanese Unexamined Patent Application, Publication No. Sho 63-186916

JP 63 124810 A discloses a load control device for a steam/exhaust gas turbine. When a steam turbine S/T is started to be driven by the steam generated by the heat recovered from exhaust gas of a main diesel engine, the lift of the steam regulating valve of the steam turbine S/T is small and the load to its generator is also small because the amount of supplied steam is small. On this state, surplus exhaust gas from the main engine is started to be sent to an exhaust gas turbine R/T.

Summary of Invention

Technical Problem

In the above-mentioned power-generating system, because the inlet valve for guiding the exhaust gas to the power turbine includes an on-off valve that switches between ON and OFF states, it is impossible to supply a desired amount of exhaust gas to the power turbine. Thus, even if the energy demand has changed, a constant amount of exhaust gas is supplied to the power turbine, and hence, the output of the power turbine cannot be arbitrarily changed. Therefore, the output of a steam turbine has to be adjusted in order to cope with a change in energy demand, and, when the amount of steam generated in an exhaust-gas boiler is larger than the amount of steam needed in the steam turbine, surplus steam that does not contribute to power generation is discharged (dumped) in the air. This is a waste of the steam energy recovered from the exhaust of the diesel engine and a waste of fuel of the diesel engine.

Although PTL 1 above discloses an invention in which the amount of exhaust gas supplied to the power turbine is adjusted in stages, the power turbine disclosed in PTL 1 is used to recover motive power for the diesel engine, and there is no disclosure at all as to how to adjust the amount of exhaust gas when the output of the power turbine is used for generating power.

The present invention has been made in view of the above-described circumstances, and an object thereof is to provide a power-generating-system control device, a power-generating system, and a method of controlling a power-generating system in which surplus steam discarded without being used in a steam turbine is reduced, thereby improving the fuel economy of a main engine.

Solution to Problem

To overcome the above-described problems, there is provided a power-generating-system control device as set out in independent claim 1, a power-generating system as set out in claim 8, and a method of controlling a power-generating system as set out in independent claim 9. Advantageous developments are defined in the dependent claims.

Specifically, a power-generating-system control device according to a first aspect of the present invention controls a turbine generator including a power turbine that is driven by exhaust gas extracted from an upstream side of a supercharger of a main engine; a steam turbine that is connected in series to the power turbine and is driven by steam generated by an exhaust-gas boiler using exhaust gas from the main engine; and a generator that is connected in series to the power turbine and the steam turbine, such that outputs of the power turbine and the steam turbine are controlled. Available output of the steam turbine that can be obtained from a present operating state of the main engine is acquired in advance as steam-turbine available output. The output of the steam turbine is determined so as to approximate the steam-turbine available output in relation to the energy demand. The output of the power turbine is determined so as to compensate for the difference between the output of the steam turbine and the energy demand.

Because the output of the steam turbine is determined so as to approximate the steam-turbine available output, the exhaust-gas energy obtained from the main engine via the exhaust-gas boiler can be efficiently used in the steam turbine. Therefore, the steam generated in the exhaust-gas boiler can be prevented, as much as possible, from being discarded as surplus steam without being used in the steam turbine. With this configuration, by efficiently recovering the exhaust heat of the main engine, the fuel economy of the main engine can be improved. Note that the maximum steam-turbine output obtained from the exhaust-gas energy of the main engine is typically used as the steam-turbine available output.

The steam-turbine output is determined in relation to the energy demand. More specifically, when the energy demand is higher than the steam-turbine available output, it is preferable that the steam-turbine output be equal to the steam-turbine available output or a close value less than the steam-turbine available output (e.g., the value obtained by subtracting the minimum output of the power turbine from the energy demand). When the energy demand is lower than the steam-turbine available output, it is preferable that the steam-turbine output be equal to or less than the available output so as to meet the energy demand.

Furthermore, the output of the power turbine is determined so as to compensate for the difference between the steam-turbine output (e.g., the fed-back present output) and the energy demand. More specifically, the amount of exhaust gas supplied to the power turbine is adjusted such that the power turbine shares the remaining load for meeting the energy demand. By doing so, it is possible to make the steam turbine preferentially share a portion of the output, which the steam turbine can bear, of the energy demand.

Examples of a typical main engine include a marine-propulsion diesel engine.

In addition, in the power-generating-system control device according to the first aspect of the present invention, it is preferable that the steam-turbine available output be determined in advance in accordance with the load on the main engine.

Because the steam-turbine available output is determined in advance in accordance with the load on the main engine, when the load on the main engine changes, the steam-turbine available output can be immediately obtained from the changed load on the main engine. Because the output of the steam turbine can be determined on the basis of the available output obtained in this manner, the steam turbine can be operated with good responsiveness to a change in the load on the main engine.

Furthermore, because the load on the main engine reflects the flow rate of the exhaust gas and the pressure of the exhaust gas, it is suitable for obtaining the steam-turbine available output.

In addition, in the power-generating-system control device according to the first aspect of the present invention, it is preferable that the steam-turbine available output be corrected according to the temperature of the exhaust gas at an inlet of the exhaust-gas boiler.

Because the amount of steam generated by the exhaust-gas boiler is changed by a change in temperature of the exhaust gas at the inlet of the exhaust-gas boiler, the steam-turbine available output is corrected according to the temperature of the exhaust gas at the inlet of the exhaust-gas boiler. More specifically, when the temperature of the exhaust gas is higher than the standard temperature (e.g., 300 °C), the available output is increased, whereas when the temperature of the exhaust gas is lower than the standard temperature, the available output is decreased.

In addition, in the power-generating-system control device according to the first aspect of the present invention, it is preferable that the available output of the power turbine that can be obtained from the present operating state of the main engine be acquired in advance as power-turbine available output, and that the output of the power turbine be determined so as not to exceed the power-turbine available output.

Because the output of the power turbine is determined so as not to exceed the available output determined from the present operating state of the main engine, the output of the power turbine is not set to an excessive level, making it possible to prevent excessive exhaust-gas extraction and to suppress any influence on the operation of the supercharger and the main engine. Note that the maximum power-turbine output obtained from the exhaust-gas energy of the main engine is typically used as the power-turbine available output.

In addition, in the power-generating-system control device according to the first aspect of the present invention, it is preferable that the power-turbine available output be determined in advance in accordance with the load on the main engine.

Because the power-turbine available output is determined in advance in accordance with the load on the main engine, when the load on the main engine changes, the available output can be immediately obtained from the changed load on the main engine. Because the output of the power turbine can be determined on the basis of the available output obtained in this manner, the power turbine can be operated with good responsiveness to a change in the load on the main engine.

Furthermore, because the load on the main engine reflects the flow rate of the exhaust gas and the pressure of the exhaust gas, it is suitable for obtaining the power-turbine available output.

In addition, in the power-generating-system control device according to the first aspect of the present invention, it is preferable that the power-turbine available output be corrected according to the air temperature at an inlet of the supercharger.

When the air temperature at the inlet of the supercharger changes, the exhaust-gas energy from the main engine changes because the air density changes. Thus, the power-turbine available output is corrected according to the air temperature at the inlet of the supercharger. More specifically, when the air temperature is higher than the standard temperature (e.g., 25 °C), because the air density decreases, the available output is decreased; whereas when the air temperature is lower than the standard temperature, because the air density increases, the available output is increased.

In addition, in the power-generating-system control device according to the first aspect of the present invention, it is preferable that the output of a power-generating diesel engine be determined so as to compensate for the difference between the energy demand and the outputs of the steam turbine and the power turbine when the output of the power-generating diesel engine of a diesel-engine generator provided separately from the turbine generator is determined.

When a diesel-engine generator is provided, the output of the power-generating diesel engine is determined so as to compensate for the difference between the energy demand and the outputs of the steam turbine (e.g., the fed-back present output) and the power turbine (e.g., the fed-back present output). That is, the priority of the power-generating diesel engine for sharing the load is lower than those of the steam turbine and the power turbine. By doing so, the steam turbine and the power turbine can be mainly used and the diesel-engine generator can be used in an auxiliary manner, making it possible to reduce the starting time and the load on the power-generating diesel engine, and thus, making it possible to increase the energy efficiency of the overall power-generating system.

Furthermore, a power-generating system according to a second aspect of the present invention includes any one of the above-described power-generating-system control devices, and a steam turbine and a power turbine that are controlled by the control device.

Because the steam turbine and the power turbine are controlled by the above-described control device, a power-generating system whose main engine has improved fuel economy can be provided.

Furthermore, in a method of controlling a power-generating system according to a third aspect of the present invention, a turbine generator, including a power turbine that is driven by exhaust gas extracted from an upstream side of a supercharger of a main engine, a steam turbine that is connected in series to the power turbine and is driven by steam generated by an exhaust-gas boiler using exhaust gas from the main engine, and a generator that is connected in series to the power turbine and the steam turbine, is controlled such that loads on the power turbine and the steam turbine are controlled. Available output of the steam turbine that can be obtained from a present operating state of the main engine is acquired in advance as steam-turbine available output. The output of the steam turbine is determined so as to approximate the steam-turbine available output in relation to the energy demand. The output of the power turbine is determined so as to compensate for the difference between the output of the steam turbine and the energy demand.

Because the output of the steam turbine is determined so as to approximate the steam-turbine available output, the exhaust-gas energy obtained from the main engine via the exhaust-gas boiler can be efficiently used in the steam turbine. Therefore, the steam generated in the exhaust-gas boiler can be prevented, as much as possible, from being discarded as surplus steam without being used in the steam turbine. With this configuration, by efficiently recovering the exhaust heat of the main engine, the fuel economy of the main engine can be improved. Note that the maximum steam-turbine output obtained from the exhaust-gas energy of the main engine is typically used as the steam-turbine available output.

The steam-turbine output is determined in relation to the energy demand. More specifically, when the energy demand is higher than the steam-turbine available output, it is preferable that the steam-turbine output be equal to the steam-turbine available output or a close value less than the steam-turbine available output (e.g., the value obtained by subtracting the minimum output of the power turbine from the energy demand). When the energy demand is lower than the steam-turbine available output, it is preferable that the steam-turbine output be equal to or less than the available output so as to meet the energy demand.

Furthermore, the output of the power turbine is determined so as to compensate for the difference between the steam-turbine output (e.g., the fed-back present output) and the energy demand. More specifically, the amount of exhaust gas supplied to the power turbine is adjusted such that the power turbine shares the remaining load for meeting the energy demand. By doing so, it is possible to make the steam turbine preferentially share a portion of the output, which the steam turbine can bear, of the energy demand.

Examples of a typical main engine include a marine-propulsion diesel engine.

{Advantageous Effects of Invention}

With the present invention, by suppressing generation of surplus steam, the fuel economy of the main engine can be improved.

{Brief Description of Drawings}

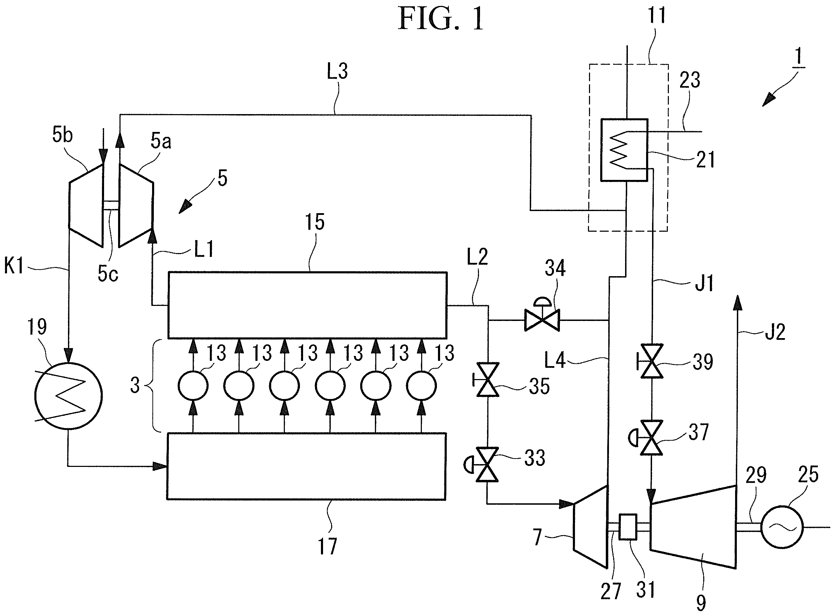

{FIG. 1} FIG. 1 is a schematic diagram of the configuration of a turbine generator of a power-generating system according to an embodiment of the present invention.

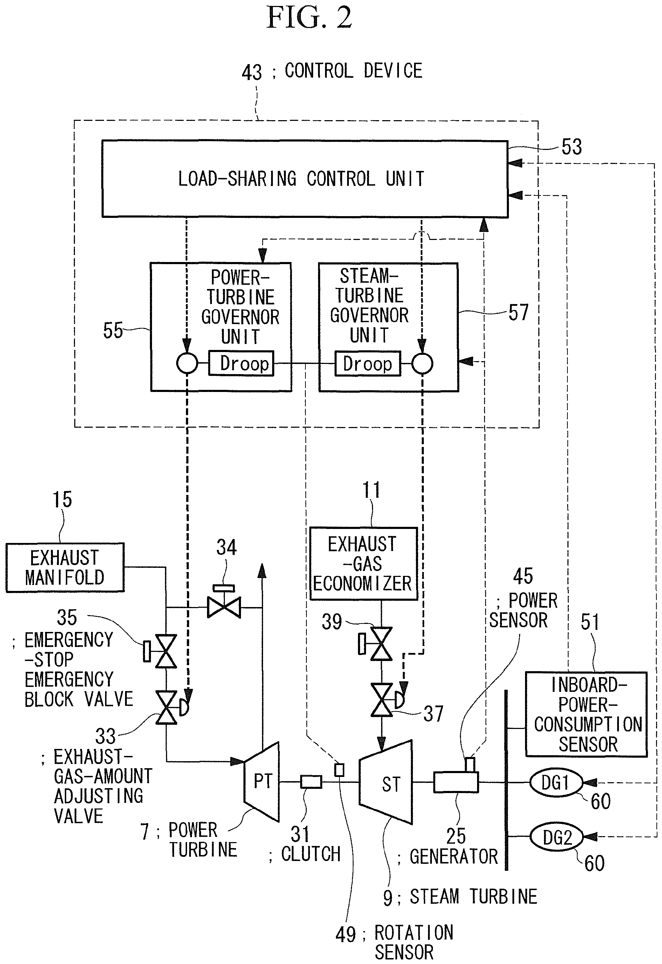

{FIG. 2} FIG. 2 is a schematic diagram of the configuration of a power-generating-system control device having the turbine generator shown in FIG. 1.

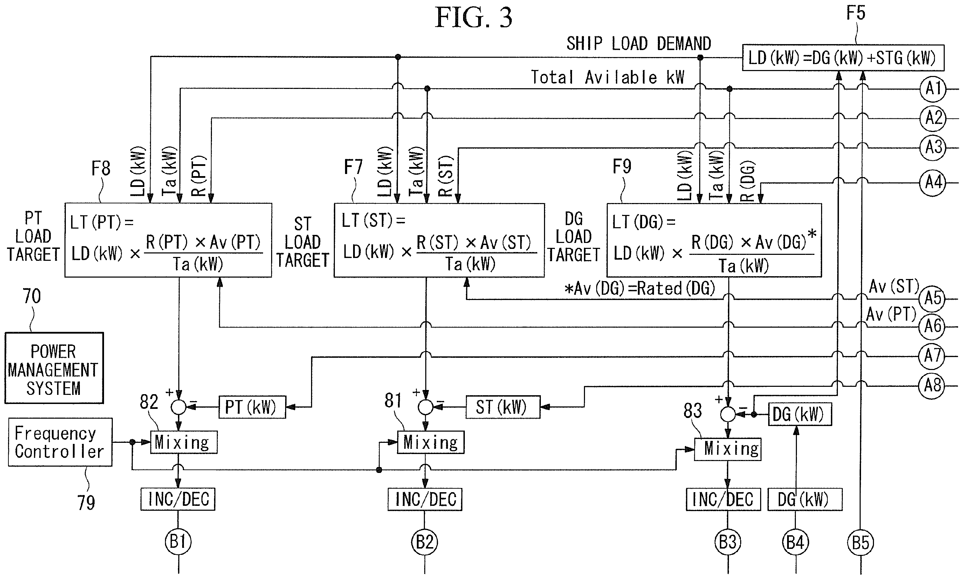

{FIG. 3} FIG. 3 is a control block diagram showing a part of the power-generating-system control device according to an embodiment of the present invention.

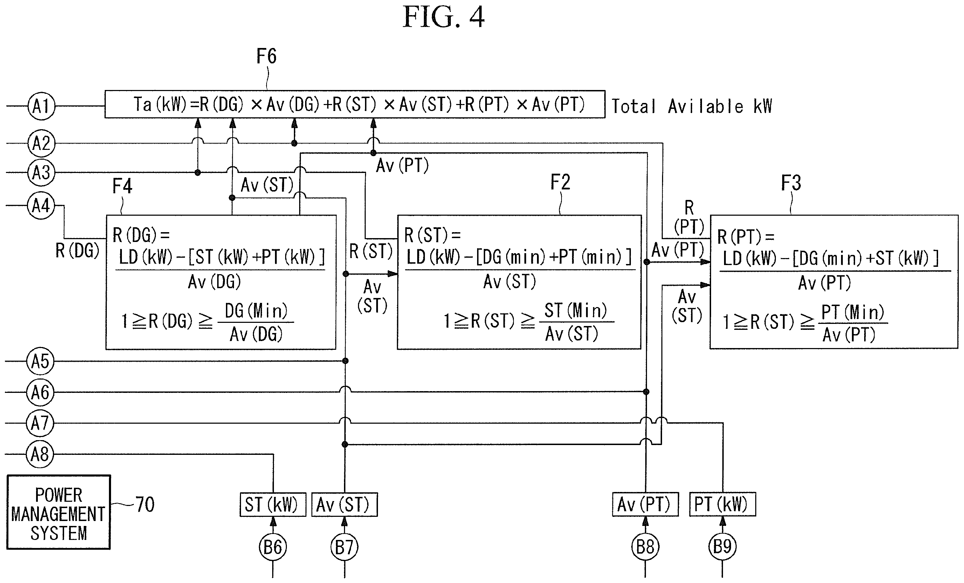

{FIG. 4} FIG. 4 is a control block diagram showing a part, which is different from the part shown in FIG. 3, of the power-generating-system control device according to an embodiment of the present invention.

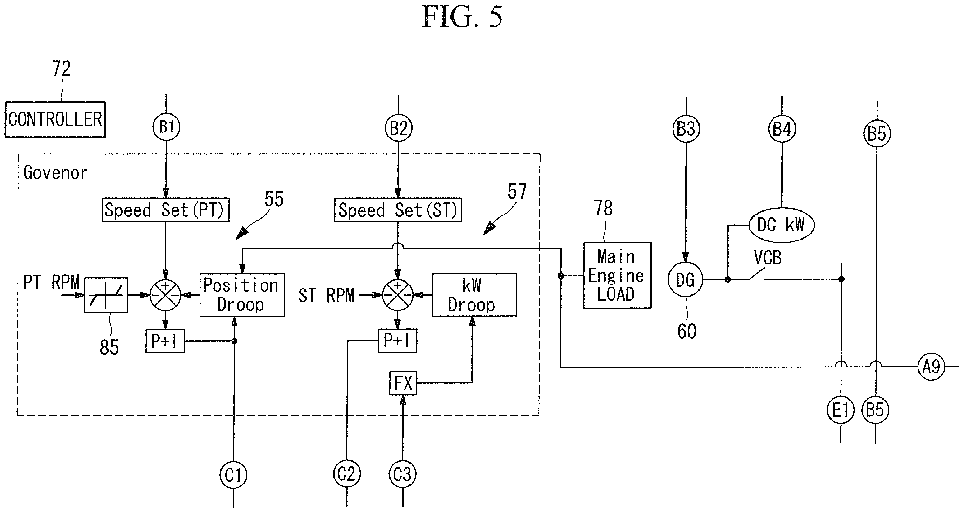

{FIG. 5} FIG. 5 is a control block diagram showing a part, which is different from the part shown in FIG. 3, of the power-generating-system control device according to an embodiment of the present invention.

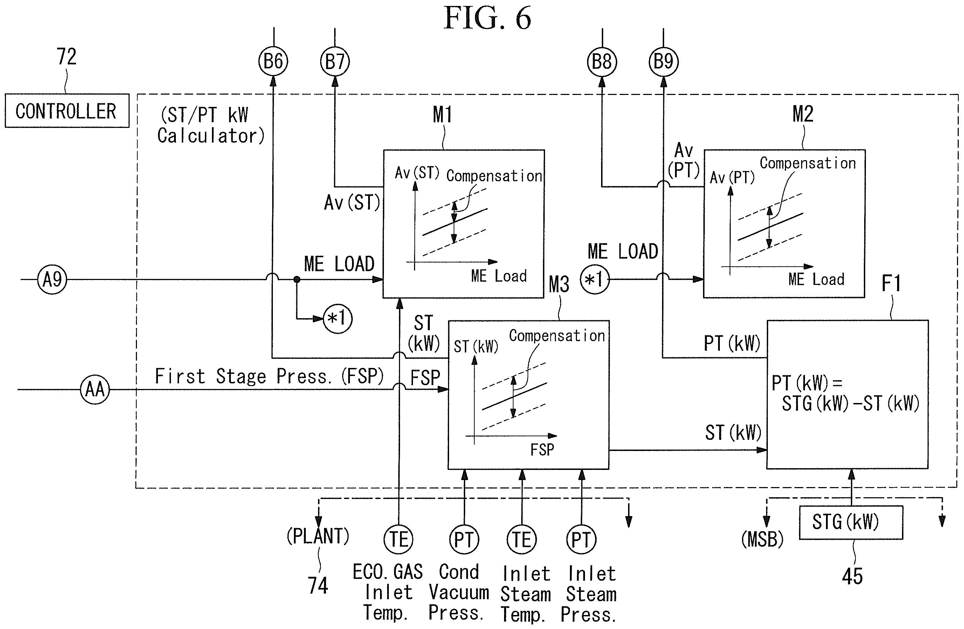

{FIG. 6} FIG. 6 is a control block diagram showing a part, which is different from the part shown in FIG. 3, of the power-generating-system control device according to an embodiment of the present invention.

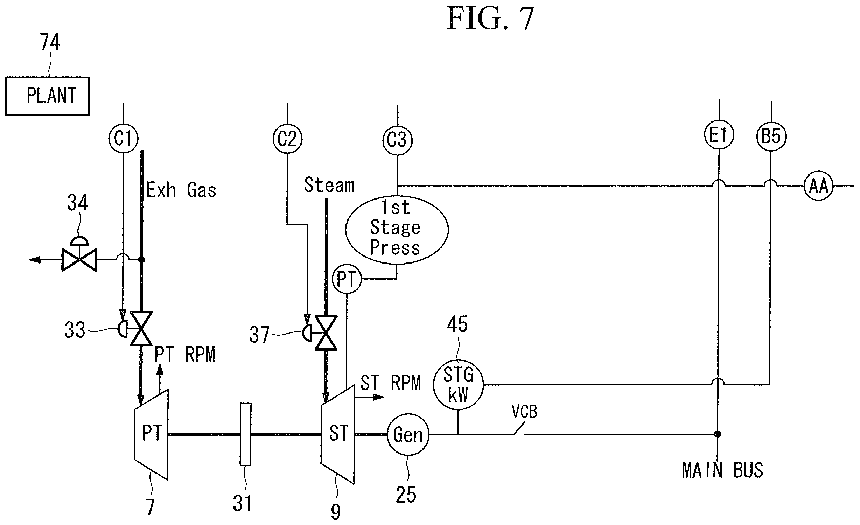

{FIG. 7} FIG. 7 is a control block diagram showing a part, which is different from the part shown in FIG. 3, of the power-generating-system control device according to an embodiment of the present invention.

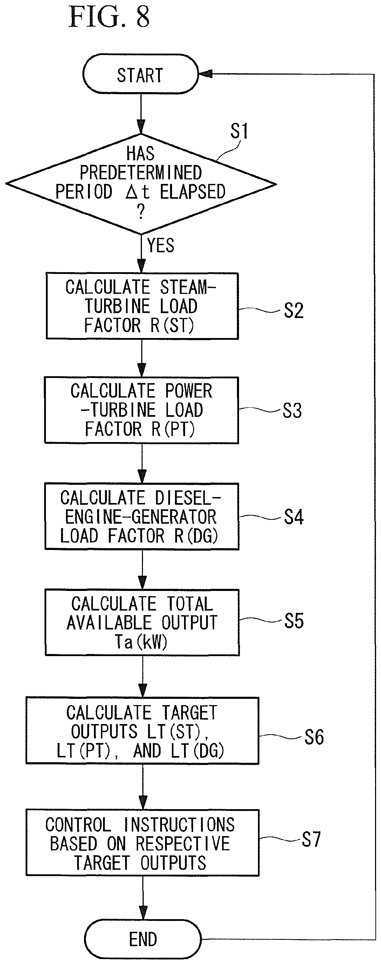

{FIG. 8} FIG. 8 is a flowchart showing an operation flow of the power-generating-system control device according to an embodiment of the present invention.

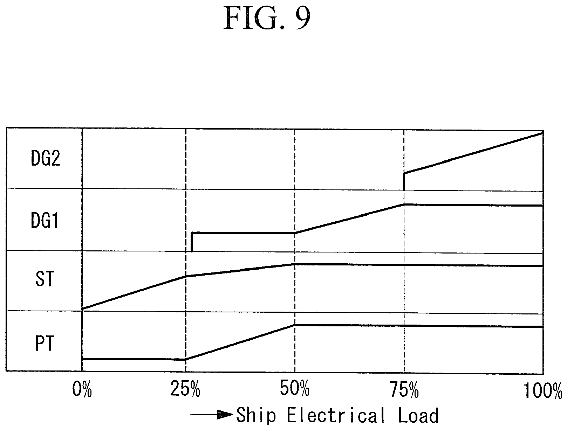

{FIG. 9} FIG. 9 is a diagram showing the load-sharing proportion of a power-generating system according to an embodiment of the present invention.

{Description of Embodiments}

Embodiments of the present invention will be described below with reference to the drawings.

FIG. 1 shows, in outline, the configuration of a turbine generator of a power-generating system according to this embodiment. In this embodiment, a marine-propulsion diesel engine 3 is used as a main engine.

A turbine generator 1 includes the marine-propulsion diesel engine (main engine) 3, an exhaust turbocharger 5 driven by exhaust gas from the diesel engine 3, a power turbine (gas turbine) 7 driven by the exhaust gas from the diesel engine 3 extracted from an upstream side of the exhaust turbocharger 5, an exhaust-gas economizer (exhaust-gas boiler) 11 that generates steam using the exhaust gas from the diesel engine 3, and a steam turbine 9 driven by the steam generated by the exhaust-gas economizer 11.

The output of the diesel engine 3 is directly or indirectly connected to a screw propeller via a propeller shaft. Furthermore, exhaust ports of cylinder portions 13 of cylinders of the diesel engine 3 are connected to an exhaust manifold 15, which serves as an exhaust-gas collecting pipe, and the exhaust manifold 15 is connected to an inlet side of a turbine section 5a of the exhaust turbocharger 5 via a first exhaust pipe L1. Furthermore, the exhaust manifold 15 is connected to an inlet side of the power turbine 7 via a second exhaust pipe L2 (extraction path). Thus, a portion of the exhaust gas is extracted and supplied to the power turbine 7 before being supplied to the exhaust turbocharger 5.

On the other hand, intake ports of the cylinder portions 13 are connected to an intake manifold 17, and the intake manifold 17 is connected to a compressor section 5b of the exhaust turbocharger 5 via an intake pipe K1. Furthermore, the intake pipe K1 is provided with an air cooler (intercooler) 19.

The exhaust turbocharger 5 includes the turbine section 5a, the compressor section 5b, and a rotational shaft 5c connecting the turbine section 5a and the compressor section 5b.

The power turbine 7 is rotationally driven by exhaust gas extracted from the exhaust manifold 15 via the second exhaust pipe L2, and the steam turbine 9 is rotationally driven by being supplied with steam generated by the exhaust-gas economizer 11.

To this exhaust-gas economizer 11, exhaust gas discharged from an outlet side of the turbine section 5a of the exhaust turbocharger 5 via a third exhaust pipe L3 and exhaust gas discharged from an outlet side of the power turbine 7 via a fourth exhaust pipe L4 are introduced, and a heat exchanger 21 evaporates water supplied by a water-supply pipe 23 utilizing the heat of the exhaust gas, thus generating steam. The steam generated by the exhaust-gas economizer 11 is introduced into the steam turbine 9 via a first steam pipe J1, and the steam used in the steam turbine 9 is discharged and guided to a condenser (not shown) through a second steam pipe J2.

The power turbine 7 and the steam turbine 9 are joined in series to drive a generator 25. A rotational shaft 29 of the steam turbine 9 is connected to the generator 25 via a reduction gear and a coupling (not shown), and a rotational shaft 27 of the power turbine 7 is connected to the rotational shaft 29 of the steam turbine 9 via a reduction gear (not shown) and a clutch 31. Examples of the clutch 31 include a clutch that is engaged or disengaged at a predetermined rotational speed, and, for example, an SSS (Synchro-Self-Shifting) clutch is suitably used.

Furthermore, the second exhaust pipe L2 is provided with an exhaust-gas-amount adjusting valve 33 that controls the amount of gas introduced into the power turbine 7, and an emergency-stop emergency block valve 35 that shuts off the supply of the exhaust gas to the power turbine 7 in an emergency. Furthermore, a bypass valve 34 is provided between the second exhaust pipe L2 and the fourth exhaust pipe L4 to prevent excessive supercharging (i.e., supercharging beyond the optimum operating pressure of the engine) to the turbine section 5a of the exhaust turbocharger 5 when the emergency-stop emergency block valve 35 is shut.

In addition, the first steam pipe J1 is provided with a steam-amount adjusting valve 37 that controls the amount of steam introduced into the steam turbine 9, and an emergency-stop emergency block valve 39 that shuts off the supply of the steam to the steam turbine 9 in an emergency. The degrees of opening of the exhaust-gas-amount adjusting valve 33 and the steam-amount adjusting valve 37 are controlled by a control device 43 described below.

As has been described, the generator 25 is driven by using the exhaust-gas energy of the exhaust gas (combustion gas) of the marine-propulsion diesel engine 3 as motive power and constitutes an exhaust-gas energy recovery device.

FIG. 2 shows, in outline, the configuration of a power-generating-system control device including the turbine generator 1 shown in FIG. 1.

The power-generating system includes a plurality of (two in this embodiment) diesel-engine generators 60 installed inboard, in addition to the turbine generator 1.

Signals from a power sensor 45 that detects the output power of the generator 25 and signals from a rotation sensor 49 that detects the rotational speed of the rotational shaft 29 of the steam turbine 9, which may be regarded as the rotational speed of the generator 25, are input to the control device 43. Furthermore, output signals from the diesel-engine generators 60 and signals from an inboard-power-consumption sensor 51 that detects the inboard power consumption are input to the control device 43.

Furthermore, the control device 43 includes a load-sharing control unit 53, a power-turbine governor unit 55, a steam-turbine governor unit 57, and governor units (not shown) for the diesel-engine generators 60.

Signals instructing the output according to the load factors set by the load-sharing control unit 53 are output to the power-turbine governor unit 55, the steam-turbine governor unit 57, and the governor units for the diesel-engine generators 60.

In the power-turbine governor unit 55, according to the output of the power turbine 7 instructed from the load-sharing control unit 53, a control signal is calculated based on the deviation from the actual rotational speed detected by the rotation sensor 49 on the basis of a preset control function of rotational-speed droop control (proportional control), so that the varying rotational speed of the generator 25 is stabilized at a target rotational speed. Then, the control signal is output to the exhaust-gas-amount adjusting valve 33, where the degree of opening of the exhaust-gas-amount adjusting valve 33 is controlled so that the flow rate of exhaust gas supplied to the power turbine 7 is controlled. This rotational-speed droop control function is a function for calculating the control level by multiplying the deviation between the target rotational speed and the actually controlled current rotational speed by a proportional gain.

Furthermore, similarly to the power-turbine governor unit 55, in the steam-turbine governor unit 57, according to the output load proportion of the steam turbine 9 instructed from the load-sharing control unit 53, a control signal is calculated based on the deviation from the actual rotational speed detected by the rotation sensor 49 on the basis of a preset control function of rotational-speed droop control (proportional control), so that the varying rotational speed of the generator 25 is stabilized at a target rotational speed. Then, the control signal is output to the steam-amount adjusting valve 37, where the degree of opening of the steam-amount adjusting valve 37 is controlled so that the amount of steam supplied to the turbine 9 is controlled.

Next, details of the control device 43 will be described using FIGS. 3 to 7. The control device 43 is shown in five diagrams, namely, FIGS. 3 to 7, in a split manner. The overall configuration of the control device 43 is obtained by combining these diagrams. A power management system 70 shown in FIGS. 3 and 4 is positioned at the upper part when FIGS. 3 to 7 are arranged, and a controller unit 72 shown in FIGS. 5 and 6 is positioned below FIGS. 3 and 4 when FIGS. 3 to 7 are arranged, and a plant 73 shown in FIG. 7 is positioned below FIGS. 5 and 6 when FIGS. 3 to 7 are arranged.

The control device 43 mainly includes the power management system 70 and the controller unit 72.

FIGS. 3 and 4 show the configuration of the power management system 70 and have such a relationship that FIG. 3 is positioned on the left side and FIG. 4 is positioned on the right side, and signal lines A1 to A8 are connected thereto.

FIGS. 5 and 6 show the configuration of the controller unit 72 and have such a relationship that FIG. 5 is positioned on the left side and FIG. 6 is positioned on the right side, and a signal line A9 is connected thereto. Furthermore, FIGS. 5 and 6 are positioned below FIGS. 3 and 4 that show the power management system 70, and signal lines B1 to B9 are connected thereto. Although the diesel-engine generator 60 is shown in FIG. 5 for convenience of illustration, this belongs to the configuration of a plant 74 shown in FIG. 7. Furthermore, various signals obtained from the plant 74 side are shown at the lower part in FIG. 6.

FIG. 7 shows the plant 74 of the power-generating system, as well as the power turbine 7 and the steam turbine 9 shown in FIGS. 1 and 2. FIG. 7 is positioned below FIGS. 5 and 6, and signal lines C1 to C3, B5, and AA, and a power line E1 are connected thereto.

[Steam-Turbine Available Output Av(ST)]

A map M1 in FIG. 6 shows a map used when calculating an available output Av(ST) of the steam turbine 9. The map M1 is stored in a memory provided in the controller unit 72. In the map M1, the steam-turbine available output Av(ST) is plotted on the vertical axis, and the load of the diesel engine 3 (ME Load) is plotted on the horizontal axis. The map M1 is generated in advance on the basis of design data and test-run data. Note that the maximum steam-turbine output obtained from the exhaust-gas energy of the diesel engine 3 is used as the steam-turbine available output Av(ST).

The load on the diesel engine 3 is input from a diesel-engine load detector 78 (Main Engine Load) in FIG. 5 through the signal line A9, and the steam-turbine available output Av(ST) is obtained from this input value and the map M1. The thus-obtained steam-turbine available output Av(ST) is output to the power management system 70 shown in FIG. 4 via the signal line B7.

The steam-turbine available output Av(ST) obtained from the map M1 is corrected (compensated for) according to the temperature of the exhaust gas (ECO. GAS Inlet Temp.) at the inlet (upstream side) of the exhaust-gas economizer 11 (see FIG. 1). This is because, if the temperature of the exhaust gas at the inlet of the exhaust-gas economizer 11 changes, the amount of steam generated by the exhaust-gas boiler changes. More specifically, when the temperature of the exhaust gas is higher than the standard temperature (e.g., 300 °C), the available output is increased, whereas when the temperature of the exhaust gas is lower than the standard temperature, the available output is decreased.

[Power-Turbine Available Output (Av(PT)]

A map M2 in FIG. 6A shows a map used to calculate the available output Av(PT) of the power turbine 7. The map M2 is stored in a memory provided in the controller unit 72. In the map M2, the power-turbine available output Av(PT) is plotted on the vertical axis, and the load (ME Load) of the diesel engine 3 is plotted on the horizontal axis, and the map M2 is generated in advance on the basis of design data and test-run data. Note that the maximum power-turbine output obtained from the exhaust-gas energy of the diesel engine 3 is used as the power-turbine available output Av(PT).

The load on the diesel engine 3 is input from the diesel-engine load detector 78 (Main Engine Load) in FIG. 5 through the signal line A9, and the power-turbine available output Av(PT) is obtained from this input value and the map M2. The thus-obtained power-turbine available output Av(PT) is output to the power management system 70 shown in FIG. 4 via the signal line B8.

The power-turbine available output Av(PT) obtained from the map M2 is corrected (compensated for) according to the air temperature at the inlet of the exhaust turbocharger 5 (see FIG. 1). This is because, if the air temperature at the inlet of the exhaust turbocharger 5 changes, the air density changes, and the exhaust-gas energy from the diesel engine 3 changes. More specifically, when the air temperature is higher than the standard temperature (e.g., 25 °C), the air density decreases, and the available output decreases, whereas when the air temperature is lower than the standard temperature, the air density increases, and the available output increases. Although not shown in the map M2 in FIG. 6, the air temperature at the inlet of the exhaust turbocharger 5 is input to the map M2.

[Steam-Turbine Actual Output ST(kW)]

The actual output (present output), which is the current output of the steam turbine 9, is obtained from a map M3 shown in FIG. 6. The map M3 is stored in a memory provided in the controller unit 72. In the map M3, a steam-turbine actual output ST(kW) is plotted on the vertical axis, and a first-stage pressure (First Stage Pressure; FSP) of the steam turbine 9 is plotted on the horizontal axis. As shown in FIG. 7, the first-stage pressure FSP of the steam turbine 9 is obtained from a pressure sensor (PT) that is provided on a downstream side of a first-stage turbine (high-pressure turbine) of the steam turbine 9 through the signal line AA. Furthermore, as shown in FIG. 6, the map M3 is corrected according to a condenser pressure (Cond Vacuum Press.), an inlet steam temperature (Inlet Steam Temp.), and an inlet steam pressure (Inlet Steam Press.) of the steam turbine plant. The steam-turbine actual output ST(kW) obtained from the map M3 is output to the power management system 70 shown in FIG. 4 via the signal line B6 and to a calculation unit F1 described below.

[Power-Turbine Actual Output PT(kW)]

The actual output (present output), which is the current output of the power turbine 7, is obtained from the calculation unit F1 shown in FIG. 6. A formula used in this calculation unit F1 is stored in a memory provided in the controller unit 72. In the calculation unit F1, as shown in Formula (1) below, a power-turbine actual output PT can be obtained from the difference between a turbine-generator output STG(kW) obtained from the power sensor 45 that detects the output power of the generator 25 (see FIG. 7) and the steam-turbine actual output ST(kW) obtained in the map M3.

$$PT(kW) = STG(kW) - ST(kW) \qquad (1)$$

The power-turbine actual output PT(kW) obtained in the calculation unit F1 is output to the power management system 70 shown in FIG. 4 via the signal line B9.

[Steam-Turbine Load Factor R(ST)]

As shown in FIG. 4, a load factor R(ST) of the steam turbine 9 is calculated in a calculation unit F2 of the power management system 70. The steam-turbine load factor R(ST) is obtained from Formula (2) below.

$$R(ST) = [LD(kW) - [DG(min) + PT(min)]] / Av(ST) \qquad (2)$$

Herein, an inboard energy demand LD(kW) is obtained from the sum of a diesel-engine generator output DG(kW) and the turbine-generator output STG(kW), as shown in the calculation unit F5 in FIG. 3. The minimum output of the diesel-engine generator 60 (see FIG. 5), DG(min), represents the minimum output with which the power-generating diesel engine is stably operated. The minimum output of the power turbine 7, PT(min), represents the minimum output with which the power turbine can be stably operated, and more specifically, it is determined on the basis of the output at a rotational speed at which the clutch 31 connecting the power turbine 7 and the steam turbine 9 is engaged or disengaged; for example, 10% of the rated output of the power turbine.
As shown in Formula (2), by using an expression in which the diesel-generator minimum output DG(min) and the power-turbine minimum output PT(min) are subtracted from the inboard energy demand LD(kW) as the numerator of the formula, the required output for the steam turbine 9 can be determined in preference to those of the diesel-engine generator 60 and the power turbine 7, and the maximum output can be allocated for the steam turbine 9. Furthermore, by using the steam-turbine available output Av(ST) as the denominator of the formula, the required output for the steam turbine 9 is expressed as a proportion relative to the steam-turbine available output Av(ST), and the output of the steam turbine 9 can be used with the maximum efficiency.
Furthermore, as shown in the calculation unit F2, the steam-turbine load factor R(ST) is equal to or less than 1, and hence, output exceeding the steam-turbine available output Av(ST) is not required. In addition, the steam-turbine load factor R(ST) is equal to or larger than ST(min)/Av(ST), and hence, output below the minimum output at which the steam turbine 9 can be stably operated is not required.

[Power-Turbine Load Factor R(PT)]

As shown in FIG. 4 a load factor R(PT) of the power turbine 7 is calculated in a calculation unit F3 of the power management system 70. The power-turbine load factor R(PT) is obtained from Formula (3) below.

$$R(PT) = [LD(kW) - [DG(min) + ST(kW)]] / Av(PT) \qquad (3)$$

As shown in Formula (3), by using an expression in which the diesel-generator minimum output DG(min) and the steam-turbine actual output ST(kW) are subtracted from the inboard energy demand LD(kW) as the numerator of the formula, the steam turbine 9 can be prioritized, the required output for the power turbine 9 can be determined in preference to that of the diesel-engine generator 60, and the exhaust heat of the diesel engine 3 can be fully recovered. Furthermore, by using the power-turbine available output Av(PT) as the denominator of the formula, the required output for the power turbine 7 is expressed as a proportion relative to the power-turbine available output Av(PT), and the output of the power turbine 7 can be used with the maximum efficiency.

Furthermore, as shown in the calculation unit F3, the power-turbine load factor R(PT) is equal to or less than 1, and hence, output exceeding the power-turbine available output Av(PT) is not required. In addition, the power-turbine load factor R(PT) is equal to or larger than PT(min)/Av(PT), and hence, output below the minimum output at which the power turbine 9 can be stably operated is not required.

[Diesel-Engine-Generator Load Factor R(DG)]

As shown in FIG. 4, a load factor R(DG) of the diesel-engine generator 60 is calculated in a calculation unit F4 of the power management system 70. The diesel-engine-generator load factor R(DG) is obtained from Formula (4) below.

$$R(DG) = [LD(kW) - [ST(kW) + PT(kW)]]/Av(DG) \qquad (4)$$

Herein, the rated output of the diesel-engine generator, Rated(DG), is used as the diesel-engine-generator available output Av(DG).

As shown in Formula (4), by using an expression in which the steam-turbine actual output ST(kW) and the power-turbine actual output PT(kW) are subtracted from the inboard energy demand LD(kW) as the numerator of the formula, the steam turbine 9 and the power turbine 7 are prioritized, and the operation of the diesel-engine generator 60 is avoided as much as possible. Furthermore, by using the diesel-engine-generator available output Av(DG) as the denominator of the formula, the required output for the diesel-engine generator 60 is expressed as a proportion relative to the diesel-engine-generator available output Av(DG), and the output of the diesel-engine generator 60 can be used with the maximum efficiency.

Furthermore, as shown in the calculation unit F4, the diesel-engine-generator load factor R(DG) is equal to or less than 1, and hence, output exceeding the diesel-engine-generator available output Av(DG) is not required. In addition, the diesel-engine-generator load factor R(DG) is equal to or larger than DG(min)/Av(DG), and hence, output below the minimum output at which the diesel-engine generator can be stably operated is not required.

[Total Available Output Ta(kW)]

A total available output Ta(kW) is calculated in a calculation unit F6 shown in FIG. 4, from Formula (5) below, on the basis of results obtained by the calculation units F2, F3, and F4.

$$Ta(kW) = R(DG) \times Av(DG) + R(ST) \times Av(ST)$$

$$+ R(PT) \times Av(PT) \qquad (5)$$

[Steam-Turbine Target Output LT(ST)]

As shown in FIG. 3, a target output LT(ST) required for the steam turbine 9 is calculated by a calculation unit F7 according to Formula (6) below, using the above-described calculation values.

$$LT(ST) = LD(kW) \times [R(ST) \times Av(ST)]/Ta(kW) \qquad (6)$$

The steam-turbine target output LT(ST) obtained from Formula (6) above is subjected to a comparison operation with the steam-turbine actual output ST(kW), is converted into a signal having a predetermined frequency by a frequency controller 79 in a mixer 81, and is then output as an increase/decrease signal (INC/DEC) to the steam-turbine governor unit 57 of the controller unit 72 shown in FIG. 5 via the signal line B2.

In the steam-turbine governor unit 57, a control signal is generated on the basis of the droop control described in FIG. 2, and the control signal is output to the steam-amount adjusting valve 37 (see FIG. 7) via the signal line C2.

[Power-Turbine Target Output LT(PT)]

As shown in FIG. 3, a target output LT(PT) required for the power turbine 7 is calculated by a calculation unit F8 according to Formula (7) below, using the above-described calculation values.

$$\mathrm{LT(PT)=LD(kW)\times[R(PT)\times Av(PT)]/Ta(kW)} \qquad (7)$$

The power-turbine target output LT(PT) obtained from Formula (7) above is subjected to a comparison operation with the power-turbine actual output PT(kW), is converted into a signal having a predetermined frequency by the frequency controller 79 in a mixer 82, and is then output as an increase/decrease signal (INC/DEC) to the power-turbine governor unit 55 of the controller unit 72 shown in FIG. 5 via the signal line B1.

In the power-turbine governor unit 55, a control signal is generated on the basis of the droop control described in FIG. 2, and the control signal is output to the exhaust-gas-amount adjusting valve 33 (see FIG. 7) via the signal line C1.

As shown in FIG. 5, the power-turbine governor unit 55 has a function generator 85 that obtains the rotational speed (PT RPM) of the power turbine 7 and creates a dead band (dead zone) near the rated output of the power turbine (e.g., a few percent above or below the rated output). The function generator 85 is provided to prevent the target output instruction of the power turbine from being changed even when the rotational speed is changed to some extent near the rated output, thereby maintaining the stability of the diesel engine 3. Furthermore, with this configuration, such a change near the rated output is coped with by changing the output of the steam turbine 9. Because the steam turbine 9 is more easily controlled than the power turbine 7, stable operation of the turbine generator is achieved.

[Diesel-Engine-Generator Target Output LT(DG)]

As shown in FIG. 3, a target output LT(DG) required for the diesel-engine generator 60 is calculated by a calculation unit F9 according to Formula (8) below, using the above-described calculation values.

$$\mathrm{LT(DG)=LD(kW)\times[R(DG)\times Av(DG)]/Ta(kW)} \qquad (8)$$

The diesel-engine-generator target output LT(DG) obtained from Formula (8) above is subjected to a comparison operation with the diesel-engine-generator actual output DG(kW), is converted into a signal having a predetermined frequency by the frequency controller 79 in a mixer 83, and is then output as an increase/decrease signal (INC/DEC) to the diesel-engine-generator governor unit (not shown) of the diesel-engine generator 60 shown in FIG. 5 via the signal line B3.

Next, the operation of the power-generating-system control device according to this embodiment will be described using a flowchart in FIG. 8.

When a predetermined repeating period $\Delta t$ has elapsed (step S1), the process proceeds to step S2, where the steam-turbine load factor R(ST) is determined in the calculation unit F2 so as to be equal to the steam-turbine output obtained by subtracting the diesel-generator minimum output DG(min) and the power-turbine minimum output PT(min) from the inboard energy demand LD(kW). At this time, the steam-turbine load factor R(ST) is set so as not to exceed the steam-turbine available output Av(ST).

Next, the process proceeds to step S3, where the power-turbine load factor R(PT) is determined by the calculation unit F3 so as to be equal to the power turbine output obtained by subtracting the diesel-generator minimum output DG(min) and the steam-turbine actual output 3T(kW) from the inboard energy demand LD(kW). At this time, the power-turbine load factor R(PT) is set so as not to exceed the power-turbine available output Av(PT).

Next, the process proceeds to step S4, where the diesel-engine-generator load factor R(DG) is determined by the calculation unit F4 so as to be equal to the diesel-engine generator output obtained by subtracting the steam-turbine actual output ST(kW) and the power-turbine actual output PT(kW) from the inboard energy demand LD(kW). At this time, the diesel-engine-generator load factor R(DG) is set so as not to exceed the diesel-engine-generator available output Av(DG).

Next, the process proceeds to step S5, where the total available output Ta(kW) is calculated in the calculation unit F6.

Then, the process proceeds to step S6, where the steam-turbine target output LT(ST), the power-turbine target output LT(PT), and the diesel-engine-generator target output LT(DG) are calculated using the total available output Ta(kW) obtained in step S5.

Then, in step S7, control instructions are output from the controller unit 72 to the steam turbine 9, the power turbine 7, and the diesel-engine generator 60 on the basis of the respective target outputs.

After one flow is completed in this manner, the process returns to "start", and the same flow is repeated at a predetermined repeating period Δt.

Next, the load-sharing proportion of the power-generating system according to this embodiment will be described using FIG. 9.

The horizontal axis in FIG. 9 represents percentages of the inboard energy demand with respect to the rated output 100%. Furthermore, in the vertical axis direction, the power turbine (PT) 7, the steam turbine (ST) 9, the first diesel-engine generator (DG1) 60, the second diesel-engine generator (DG2) 60 are arranged from below, and the vertical direction of each box represents the output. Note that the output control described below is just an example. Although a configuration in which the outputs of the power turbine 7, the steam turbine 9, and the diesel-engine generators 60 are substantially equal is assumed in this embodiment, in a system in which preset outputs are different, the control standards of the inboard energy demand are appropriately changed to optimize the load sharing.

When the inboard energy demand is from 0% to 25%, the output of the steam turbine 9 is gradually increased according to an increase in the inboard energy demand while restricting the output of the power turbine 7 to the minimum value. In this manner, by preferentially using the steam turbine 9, generation and dumping (discharging into the air) of surplus steam is eliminated.

When the inboard energy demand is from 25% to 50%, the outputs of the steam turbine 9 and the power turbine 7 are gradually increased according to an increase in the inboard energy demand. In this case, the output of the power turbine 7 is increased so as to compensate for the difference between the inboard energy demand and the output of the steam turbine 9, thereby eliminating generation and dumping (discharging into the condenser) of surplus steam. Furthermore, the first diesel-engine generator 60 starts up with the minimum output so as to compensate for the inboard energy demand.

When the inboard energy demand is from 50% to 75%, the steam turbine 9 and the power turbine 7 constantly output the rated output. The output of the first diesel-engine generator 60 is gradually increased according to an increase in the inboard energy demand.

When the inboard energy demand is from 75% to 100%, the steam turbine 9, the power turbine 7, and the first diesel-engine generator 60 constantly output the rated output. The output of the second diesel-engine generator 60 is gradually increased according to an increase in the inboard energy demand.

With the power-generating system according to this embodiment described above, the following advantages are obtained.

Because the output of the steam turbine 9, i.e., the steam-turbine load factor R(ST), is determined on the basis of the value obtained by subtracting the diesel-engine generator minimum output DG(min) and the power-turbine minimum output PT(min) from the inboard energy demand LD(kW), the steam-turbine output close to the steam-turbine available output Av(ST) can be determined. By doing so, the exhaust-gas energy obtained from the diesel engine 3 via the exhaust-gas boiler 11 can be efficiently used in the steam turbine 9. Therefore, a situation in which the steam generated in the exhaust-gas boiler 11 is discharged (dumped) as surplus steam without being used in the steam turbine 9 can be prevented as much as possible. Thus, by efficiently recovering the exhaust heat of the main engine, the fuel economy of the main engine can be improved.

Furthermore, because the output of the power turbine 7 is determined so as to compensate for the difference between the steam-turbine actual output ST(kW) and the inboard energy demand LD(kW), it is possible to make the steam turbine preferentially share a certain level of output, which the steam turbine can bear, of the energy demand. Thus, generation of surplus steam can be eliminated.

Because the steam-turbine available output Av(ST) is preliminarily determined corresponding to the load on the diesel engine 3 (see the map M1 in FIG. 6), even if the load on the diesel engine 3 changes, the steam-turbine available output Av(ST) can be immediately obtained from the changed load on the diesel engine 3. Because the output of the steam turbine 9 can be determined on the basis of the available output Av(ST), the steam turbine 9 can be operated with good responsiveness to a change in the load on the diesel engine 3.

Furthermore, because the load on the diesel engine 3 reflects the flow rate of the exhaust gas and the pressure of the exhaust gas, it is suitable for obtaining the steam-turbine available output Av(ST).

Because the output of the power turbine 7 is determined so as not to exceed the power-turbine available output Av(PT) determined from the present operating state of the diesel engine 3, the output of the power turbine 7 is not set to an excessive level, making it possible to prevent excessive exhaust-gas extraction and to suppress any influence on the operation of the exhaust turbo supercharger 5 and the diesel engine 3.

Because the power-turbine available output Av(PT) is preliminarily determined corresponding to the load on the diesel engine 3, even if the load on the diesel engine 3 changes, the available output Av(PT) can be immediately obtained from the changed load on the diesel engine 3. Because the output of the power turbine 7 can be determined on the basis of the available output Av(PT), the power turbine 7 can be operated with good responsiveness to a change in the load on the diesel engine 3.

Furthermore, because the load on the diesel engine 3 reflects the flow rate of the exhaust gas and the pressure of the exhaust gas, it is suitable for obtaining the power-turbine available output Av(PT).

The output of the power-generating diesel engine 60 is determined so as to compensate for the difference between the inboard energy demand LD(kW), and the steam-turbine actual output ST(kW) and the power-turbine actual output PT(kW). That is, the priority of the power-generating diesel engine 60 for sharing the load is lower than those of the steam turbine 9 and power turbine 7. By doing so, the steam turbine 9 and the power turbine 7 can be mainly used and the diesel-engine generator 60 can be used in an auxiliary manner, making it possible to reduce the starting time and the load on the power-generating diesel engine, and thus, making it possible to increase the energy efficiency of the overall power-generating system.

Note that, although the inboard power-generating system has been described in this embodiment, the present invention may be used as a land-based power-generating system.

Furthermore, although the diesel-engine generator, which serves as a power-generating system, is provided in this embodiment, application to a power-generating system in which the diesel-engine generator is omitted is also possible.

Furthermore, although the steam-turbine output is controlled to reduce the discharge of surplus steam, if generation of a certain amount of surplus steam is allowed, the steam-turbine output can be controlled such that a predetermined amount of surplus steam is allowed.

{Reference Signs List}

| | |
|---|---|
| 1 | turbine generator |
| 3 | diesel engine |
| 5 | exhaust turbocharger |
| 7 | power turbine |
| 9 | steam turbine |
| 11 | exhaust-gas economizer (exhaust-gas boiler) |
| 25 | generator |
| 33 | exhaust-gas-amount adjusting valve |
| 37 | steam-amount adjusting valve |
| 43 | control device |
| 60 | diesel-engine generator |

**Claims**

1. A power-generating-system control device controls a turbine generator including a power turbine that is driven by exhaust gas extracted from an upstream side of a supercharger of a diesel engine; a steam turbine that is connected in series to the power turbine and is driven by steam generated by an exhaust-gas boiler using exhaust gas from the diesel engine; and a generator that is connected in series to the power turbine and the steam turbine, such that outputs of the power turbine and the steam turbine are controlled, wherein
available output of the steam turbine that can be obtained from a present operating state of the diesel engine is acquired in advance as steam-turbine available output ,
the output of the steam turbine is determined so as to approximate the steam-turbine available output in relation to the energy demand, and
the output of the power turbine is determined so as to compensate for the difference between the output of the steam turbine and the energy demand.

2. The power-generating-system control device according to Claim 1, wherein the steam-turbine available output is determined in advance in accordance with the load on the diesel engine.

3. The power-generating-system control device according to Claim 2, wherein the steam-turbine available output is corrected according to the temperature of the exhaust gas at an inlet of the exhaust-gas boiler.

4. The power-generating-system control device according to any one of Claims 1 to 3, wherein
available output of the power turbine that can be obtained from the present operating state of the diesel engine is acquired in advance as power-turbine available output, and

the output of the power turbine is determined so as not to exceed the power-turbine available output.

5. The power-generating-system control device according to Claim 4, wherein the power-turbine available output is determined in advance in accordance with the load on the diesel engine.

6. The power-generating-system control device according to Claim 5, wherein the power-turbine available output is corrected according to the air temperature at an inlet of the supercharger.

7. A power-generating-system control device according to any one of Claims 1 to 6, wherein output of a power-generating diesel engine is determined so as to compensate for the difference between the energy demand and the outputs of the steam turbine and the power turbine when the output of the power-generating diesel engine of a diesel-engine generator provided separately from the turbine generator is determined.

8. A power-generating system comprising:

the power-generating-system control device according to any one of Claims 1 to 7; and
a steam turbine and a power turbine that are controlled by the control device.

9. A method of controlling a power-generating system in which a turbine generator, including a power turbine that is driven by exhaust gas extracted from an upstream side of a supercharger of a diesel engine, a steam turbine that is connected in series to the power turbine and is driven by steam generated by an exhaust-gas boiler using exhaust gas from the diesel engine, and a generator that is connected in series to the power turbine and the steam turbine, is controlled such that loads on the power turbine and the steam turbine are controlled, wherein
available output of the steam turbine that can be obtained from a present operating state of the diesel engine is acquired in advance as steam-turbine available output,
the output of the steam turbine is determined so as to approximate the steam-turbine available output in relation to the energy demand, and
the output of the power turbine is determined so as to compensate for the difference between the output of the steam turbine and the energy demand.


**Patentansprüche**

1. Stromerzeugungssystem-Steuerungsvorrichtung, die einen Turbinengenerator steuert, einschließlich einer Antriebsturbine, die durch Abgas angetrieben wird, das von einer stromaufwärtigen Seite eines Superladers eines Dieselmotors extrahiert wird; einer Dampfturbine, die mit der Antriebsturbine in Reihe geschaltet ist und durch Dampf angetrieben wird, der durch einen Abgaskessel unter Verwendung von Abgas von dem Dieselmotor erzeugt ist; und eines Generators, der mit der Antriebsturbine und der Dampfturbine derart in Reihe geschaltet ist, dass Ausgaben der Antriebsturbine und der Dampfturbine gesteuert werden, wobei
eine verfügbare Ausgabe der Dampfturbine, die von einem gegenwärtigen Betriebszustand des Dieselmotors erhalten werden kann, als verfügbare Dampfturbinenausgabe im Voraus akquiriert ist,
die Ausgabe der Dampfturbine bestimmt ist, um die verfügbare Dampfturbinenausgabe in Beziehung zu dem Energiebedarf anzunähern, und
die Ausgabe der Antriebsturbine bestimmt ist, um die Differenz zwischen der Ausgabe der Dampfturbine und dem Energiebedarf zu kompensieren.

2. Stromerzeugungssystem-Steuerungsvorrichtung nach Anspruch 1, wobei die verfügbare Dampfturbinenausgabe gemäß der Last bezüglich des Dieselmotors im Voraus bestimmt ist.

3. Stromerzeugungssystem-Steuerungsvorrichtung nach Anspruch 2, wobei die verfügbare Dampfturbinenausgabe gemäß der Temperatur des Abgases an einem Einlass des Abgaskessels korrigiert ist.

4. Stromerzeugungssystem-Steuerungsvorrichtung nach einem der Ansprüche 1 bis 3, wobei
eine verfügbare Ausgabe der Antriebsturbine, die von dem gegenwärtigen Betriebszustand des Dieselmotors erhalten werden kann, als verfügbare Antriebsturbinenausgabe im Voraus akquiriert ist, und
die Ausgabe der Antriebsturbine so bestimmt ist, dass sie nicht die verfügbare Antriebsturbinenausgabe übersteigt.

5. Stromerzeugungssystem-Steuerungsvorrichtung nach Anspruch 4, wobei die verfügbare Antriebsturbinenausgabe gemäß der Last bezüglich des Dieselmotors im Voraus bestimmt ist.

6. Stromerzeugungssystem-Steuerungsvorrichtung nach Anspruch 5, wobei die verfügbare Antriebsturbinenausgabe gemäß der Lufttemperatur an einem Einlass des Superladers korrigiert ist.

7. Stromerzeugungssystem-Steuerungsvorrichtung nach einem der Ansprüche 1 bis 6, wobei eine Ausgabe eines stromerzeugenden Dieselmotors so bestimmt ist, dass sie die Differenz zwischen dem Energiebedarf und den Ausgaben der Dampfturbine und der Antriebsturbine kompensiert, wenn die Ausgabe des stromerzeugenden Dieselmotors eines getrennt von dem Turbinengenerator vorgesehenen Dieselmotorgenerators bestimmt ist.

8. Stromerzeugungssystem, aufweisend:

   die Stromerzeugungssystem-Steuerungsvorrichtung nach einem der Ansprüche 1 bis 7, und
   eine Dampfturbine und eine Antriebsturbine, die durch die Steuerungsvorrichtung gesteuert werden.

9. Verfahren zum Steuern eines Stromerzeugungssystem, in welchem ein Turbinengenerator, einschließlich einer Antriebsturbine, die durch Abgas angetrieben wird, das von einer stromaufwärtigen Seite eines Superladers eines Dieselmotors extrahiert wird, einer Dampfturbine, die mit der Antriebsturbine in Reihe geschaltet ist und durch Dampf angetrieben wird, der durch einen Abgaskessel unter Verwendung eines Abgases von dem Dieselmotor erzeugt ist, und eines Generators, der mit der Antriebsturbine und der Dampfturbine in Reihe geschaltet ist, derart gesteuert wird, dass Lasten bezüglich der Antriebsturbine und der Dampfturbine gesteuert werden, wobei
   eine verfügbare Ausgabe der Dampfturbine, die von einem gegenwärtigen Betriebszustand des Dieselmotors erhalten werden kann, als eine verfügbare Dampfturbinenausgabe im Voraus akquiriert wird,
   die Ausgabe der Dampfturbine so bestimmt wird, dass sie sich der verfügbaren Dampfturbinenausgabe in Beziehung zu einem Energiebedarf annähert, und
   die Ausgabe der Antriebsturbine so bestimmt wird, dass sie die Differenz zwischen der Ausgabe der Dampfturbine und dem Energiebedarf kompensiert.

## Revendications

1. Dispositif de commande de système de génération d'énergie qui commande un turbogénérateur comportant une turbine de travail qui est entraînée par des gaz d'échappement extraits depuis un côté amont d'un compresseur d'alimentation d'un moteur diesel ; une turbine à vapeur qui est raccordée en série à la turbine de travail et est entraînée par la vapeur générée par une chaudière récupératrice à l'aide de gaz d'échappement provenant du moteur diesel ;
   et un générateur qui est raccordé en série à la turbine de travail et à la turbine à vapeur, de sorte que des puissances fournies de la turbine de travail et de la turbine à vapeur soient commandées, dans lequel
   une puissance fournie disponible de la turbine à vapeur qui peut être obtenue à partir d'un état de fonctionnement présent du moteur diesel est acquise à l'avance en tant que puissance fournie disponible de turbine à vapeur,
   la puissance fournie de la turbine à vapeur est déterminée de façon à se rapprocher de la puissance fournie disponible de turbine à vapeur en lien avec la demande énergétique, et
   la puissance fournie de la turbine de travail est déterminée de façon à compenser la différence entre la puissance fournie de la turbine à vapeur et la demande énergétique.

2. Dispositif de commande de système de génération d'énergie selon la revendication 1, dans lequel la puissance fournie disponible de turbine à vapeur est déterminée à l'avance selon la charge sur le moteur diesel.

3. Dispositif de commande de système de génération d'énergie selon la revendication 2, dans lequel la puissance fournie disponible de turbine à vapeur est corrigée selon la température du gaz d'échappement au niveau d'un orifice d'entrée de la chaudière récupératrice.

4. Dispositif de commande de système de génération d'énergie selon l'une quelconque des revendications 1 à 3, dans lequel
   une puissance fournie disponible de la turbine de travail qui peut être obtenue à partir de l'état de fonctionnement présent du moteur diesel est acquise à l'avance en tant que puissance fournie disponible de turbine de travail, et
   la puissance fournie de la turbine de travail est déterminée de façon à ne pas dépasser la puissance fournie disponible de turbine de travail.

**5.** Dispositif de commande de système de génération d'énergie selon la revendication 4, dans lequel la puissance fournie disponible de turbine de travail est déterminée à l'avance selon la charge sur le moteur diesel.

**6.** Dispositif de commande de système de génération d'énergie selon la revendication 5, dans lequel la puissance fournie disponible de turbine de travail est corrigée selon la température d'air au niveau d'un orifice d'entrée du compresseur d'alimentation.

**7.** Dispositif de commande de système de génération d'énergie selon l'une quelconque des revendications 1 à 6, dans lequel une puissance fournie d'un moteur diesel de génération d'énergie est déterminée de façon à compenser la différence entre la demande énergétique et les puissances fournies de la turbine à vapeur et de la turbine de travail lorsque la puissance fournie du moteur diesel de génération d'énergie d'un générateur de moteur diesel prévu séparément du turbogénérateur est déterminée.

**8.** Système de génération d'énergie comprenant :

le dispositif de commande de système de génération d'énergie selon l'une quelconque des revendications 1 à 7 ; et
une turbine à vapeur et une turbine de travail qui sont commandées par le dispositif de commande.

**9.** Procédé de commande d'un système de génération d'énergie dans lequel un turbogénérateur, comportant une turbine de travail qui est entraînée par des gaz d'échappement extraits depuis un côté amont d'un compresseur d'alimentation d'un moteur diesel, une turbine à vapeur qui est raccordée en série à la turbine de travail et est entraînée par la vapeur générée par une chaudière récupératrice à l'aide de gaz d'échappement provenant du moteur diesel, et un générateur qui est raccordé en série à la turbine de travail et à la turbine à vapeur, est commandé de sorte que des charges sur la turbine de travail et la turbine à vapeur soient commandées, dans lequel
une puissance fournie disponible de la turbine à vapeur qui peut être obtenue à partir d'un état de fonctionnement présent du moteur diesel est acquise à l'avance en tant que puissance fournie disponible de turbine à vapeur,
la puissance fournie de la turbine à vapeur est déterminée de façon à se rapprocher de la puissance fournie disponible de turbine à vapeur en lien avec la demande énergétique, et
la puissance fournie de la turbine de travail est déterminée de façon à compenser la différence entre la puissance fournie de la turbine à vapeur et la demande énergétique.

FIG. 1

# FIG. 2

# FIG. 3

## FIG. 4

**F6**

Total Avilable kW

$$Ta(kW) = R(DG) \times Av(DG) + R(ST) \times Av(ST) + R(PT) \times Av(PT)$$

**F4**

$$R(DG) = \frac{LD(kW) - [ST(kW) + PT(kW)]}{Av(DG)}$$

$$1 \geqq R(DG) \geqq \frac{DG(Min)}{Av(DG)}$$

**F2**

$$R(ST) = \frac{LD(kW) - [DG(min) + PT(min)]}{Av(ST)}$$

$$1 \geqq R(ST) \geqq \frac{ST(Min)}{Av(ST)}$$

**F3**

$$R(PT) = \frac{LD(kW) - [DG(min) + ST(kW)]}{Av(PT)}$$

$$1 \geqq R(ST) \geqq \frac{PT(Min)}{Av(PT)}$$

Av(PT)
Av(ST)
Av(DG)

R(DG)

R(ST)

Av(ST)

R(PT)
Av(PT)

Av(ST)

Av(ST)

A1
A2
A3
A4
A5
A6
A7
A8

B6  ST(kW)
B7  Av(ST)
B8  Av(PT)
B9  PT(kW)

POWER MANAGEMENT SYSTEM — 70

# FIG. 5

EP 2 484 873 B1

FIG. 6

# FIG. 7

EP 2 484 873 B1

# FIG. 8

START

S1

HAS PREDETERMINED PERIOD $\Delta t$ ELAPSED ?

YES

CALCULATE STEAM-TURBINE LOAD FACTOR R(ST) — S2

CALCULATE POWER-TURBINE LOAD FACTOR R(PT) — S3

CALCULATE DIESEL-ENGINE-GENERATOR LOAD FACTOR R(DG) — S4

CALCULATE TOTAL AVAILABLE OUTPUT Ta(kW) — S5

CALCULATE TARGET OUTPUTS LT(ST), LT(PT), AND LT(DG) — S6

CONTROL INSTRUCTIONS BASED ON RESPECTIVE TARGET OUTPUTS — S7

END

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO63186916 B
- JP 63124810 A